# EUROPÄISCHE PATENTSCHRIFT

(11) **EP 2 388 618 B1**
(45) Veröffentlichungstag und Bekanntmachung des Hinweises auf die Patenterteilung: **27.08.2014**
(21) Anmeldenummer: 11002668.9
(22) Anmeldetag: 31.03.2011
(51) Int. Cl.: G01S 7/52, G01S 15/93, G01S 15/87, G01S 13/93

(54) **Verfahren zur Detektion von Störungen des Messbetriebs einer Ultraschall-Messanordnung eines Kraftfahrzeugs und Kraftfahrzeug**
Method for detecting malfunctions in the operation of an ultrasound measurement assembly of a motor vehicle and motor vehicle
Procédé de détection de perturbations du fonctionnement de mesure d'un agencement de mesure à ultrasons d'un véhicule automobile et véhicule automobile

(30) Priorität: 19.05.2010 DE 102010021053
(43) Veröffentlichungstag der Anmeldung: 23.11.2011
(73) Patentinhaber: Audi AG, 85045 Ingolstadt (DE); Audi Electronics Venture GmbH, 85080 Gaimersheim (DE)
(72) Erfinder: Driemecker, Matthias, 85055 Ingolstadt (DE); Limbacher, Reimund, 85055 Ingolstad (DE)
(74) Vertreter: Thielmann, Frank

(56) Entgegenhaltungen:
- DE-A1- 19 832 800
- US-A1- 2008 172 156

## Beschreibung

Die Erfindung betrifft ein Verfahren zur Detektion von Störungen des Messbetriebs einer Ultraschall-Messanordnung eines Kraftfahrzeugs bei hohen Geschwindigkeiten, insbesondere Geschwindigkeiten ab 50 km/h, wobei die wenigstens einen Ultraschall-Sensor umfassende Ultraschall-Messanordnung als Ausgangsdaten wenigstens einen den Abstand zu dem nächstgelegenen, im Erfassungsbereich des wenigstens einen zur Messung bezüglich des Radius genutzten Sensors liegenden Objekt beschreibenden Radius umfassen. Daneben betrifft die Erfindung ein zugehöriges Kraftfahrzeug.

Ultraschallsensoren, die den Abstand zu um das Kraftfahrzeug herum befindlichen Objekten durch Aussenden und Empfangen von Ultraschall vermessen, sind heute bekannt und werden meist in Fahrerassistenzsystemen eingesetzt. Ein prominentes Beispiel hierfür sind die sogenannten Einparkhilfen, denen eine Ultraschall-Messanordnung mit wenigstens einem Ultraschallsensor zugeordnet sein kann. Solche "Einparksensoren" werden bei niedrigen Geschwindigkeiten während eines Einparkvorgangs genutzt, wobei die generierten Radien aus einer Messung mit einem, aber auch mit zwei Ultraschallsensoren stammen können, wenn das von einem Ultraschallsensor ausgesandte Signal von einem anderen Ultraschallsensor empfangen wird.

Die Ultraschall-Messanordnungen von Einparkhilfen sind für den entsprechenden Einsatz konzipiert, konkret also zur Nutzung bei niedrigen Geschwindigkeiten, beispielsweise im Bereich von kleiner als 30 km/h. In einem Steuergerät der Einparkhilfe können dabei Algorithmen zur Detektion von Störungen vorgesehen werden. Solche können beispielsweise aus Störschall resultieren, der von LKW-Druckluftanlagen, Bremsgeräuschen, oder Ultraschall von Fremdfahrzeugen erzeugt werden kann.

Kürzlich wurde in Betracht gezogen, die Messergebnisse von Ultraschall-Messanordnungen auch für andere Fahrzeugsysteme, insbesondere anderer Fahrerassistenzsysteme, zu nutzen. Beispielsweise können von einer Ultraschall-Messanordnung generierte Radien im Rahmen von Spurverlassenswarn- bzw. Spurhalte-Systemen eingesetzt werden, in denen Leitplanken oder beispielsweise dem Kraftfahrzeug benachbarte Kraftfahrzeuge über die Ultraschall-Messanordnungen als Objekte detektiert werden können. Dabei können beispielsweise Radarsensoren mitberücksichtigt werden.

Allerdings hat sich gezeigt, dass bei hohen Geschwindigkeiten, insbesondere bei Geschwindigkeiten ab 50 km/h, gänzlich andere Effekte für eine Störung der Ultraschallsensoren der Ultraschall-Messanordnung verantwortlich sind. So hat sich beispielsweise gezeigt, dass es bei schlechten Witterungsbedingungen, wie beispielsweise Niederschlag, leichter zu Störungen der Ultraschallmessung kommen kann. Bei Niederschlag kann dies beispielsweise mit der durch die Kraftfahrzeuge erzeugten Gischt zusammenhängen, die sich letztlich wie eine "Mauer" vor die Ultraschallsensoren legt und falsche Radien als Messergebnisse erzeugt. Ebenso kann es bei höheren Geschwindigkeiten (ca. >150 km/h) zu Störungen aufgrund von Fahrtwind kommen.

Mithin sind die von der Ultraschall-Messanordnung generierten Radien bislang als unverlässlich zu klassifizieren, da nicht abschätzbar ist, ob es sich bei den empfangenen Werten um plausible Werte handelt oder die Sensoren auf Störeinflüsse reagieren.

DE 198 32 800 A1 betrifft ein Hinderniserfassungssystem für ein Kraftfahrzeug, welches einen Radar beinhaltet, um den Abstand zu einem Ziel zu messen, das innerhalb eines Erfassungsbereichs vorhanden ist. Dabei soll eine Verringerung der Fähigkeit, den Abstand zu dem Ziel zu messen, durch Vergleichen der Abstandsgrenze mit einem vorgegebenen Referenzwert erfolgen. Das System bezieht sich auf eine Radareinrichtung, wobei erwähntwird, dass alternativ eine Funkwelle oder eine Ultraschallwelle anstelle eines Laserstrahls verwendet werden kann.

US 2008/0172156 betrifft ein Verfahren und ein System zur Vorhersage einer Aufprallzeit und -geschwindigkeit. Es wird ein rekursiver Filter zur Auswertung von Sensordaten verwendet, der die Relativbewegung eines Zielobjekts zum eigenen Kraftfahrzeug vorhersagt. Ist jedoch das Zielobjekt näher als ein Abstandsschwellwert an dem Kraftfahrzeug, werden die Sensordaten nicht länger verwendet.

Der Erfindung liegt daher die Aufgabe zugrunde, ein Verfahren anzugeben, mit dem Störungen des Messbetriebs einer Ultraschall-Messanordnung gerade bei höheren Geschwindigkeiten verlässlich festgestellt werden können.

Zur Lösung dieser Aufgabe wird bei einem Verfahren der eingangs genannten Art erfindungsgemäß vorgeschlagen, eine Störung des Messbetriebs in Abhängigkeit wenigstens eines Vergleichs des Radius mit einem geschwindigkeitsabhängigen Mindestradius zu ermitteln, wobei der Mindestradius mit der Geschwindigkeit ansteigt.

Es wird also vorgeschlagen, die von der Ultraschall-Messanordnung, die einer Einparkhilfe zugeordnet sein kann, gelieferten Radien anhand eines Mindestradius auf Plausibilität zu prüfen. Gerade bei höheren Geschwindigkeiten ergibt es sich zwangsläufig, dass bestimmte Radien, also bestimmte Abstände zu Objekten, im entsprechenden Fahrmodus unplausibel sind. Liegen mithin gemessene Radien vor, die den Mindestradius unterschreiten, kann davon ausgegangen werden, dass vermutlich eine Störung vorliegt, das bedeutet, ein Unterschreiten des Mindestradius ist ein Indiz bei der Detektion einer Störung und wird folglich im Rahmen der vorliegenden Erfindung berücksichtigt, um hierauf eine Störungsdetektion zu basieren. Da typischerweise gestörte Ultraschallsignale stochastisch ungleichmäßig auftreten, führt dabei in den beiden Ausgestaltungen der vorliegenden Erfindung eine einzige Überschreitung noch nicht zur Detektion einer Störung, worauf im weiteren Verlauf noch näher eingegangen werden wird.

Die vorliegende Erfindung ermöglicht also die Erkennung der Nutzbarkeit von Signalen, konkret also den von der Ultraschall-Messanordnung gelieferten Radien, aus deren Signalverhalten selber ohne Nutzung weiterer Zusatzsensorik, so dass ein kostengünstiges und effizientes Verfahren gegeben ist.

Wird eine Störung detektiert, so kann beispielsweise vorgesehen sein, dass die von der Ultraschall-Messanordnung gelieferten Radien von den anderen Fahrzeugsystemen nicht mehr genutzt werden, solange die Störung vorliegt.

Falls mehrere Radien als Ausgangsdaten geliefert werden, kann vorgesehen sein, unterschiedlichen Radien unterschiedliche Mindestradien zuzuordnen. Dies kann beispielsweise von der Richtung, in der der Radius gemessen wird, abhängig gemacht werden, da beispielsweise seitlich an einem Kraftfahrzeug häufig geringere Abstände auftreten als wiederum frontal. Zusätzlich zu einer gegebenenfalls gegebenen Geschwindigkeitsabhängigkeit kann mithin vorgesehen sein, auch hier abhängig vom konkreten Sensor oder Bereich passende Plausibilitätsgrenzen zu wählen.

Zweckmäßigerweise kann dabei vorgesehen sein, dass die mehreren Radien mehreren insbesondere ortsabhängigen Gruppen, insbesondere den Seiten des Kraftfahrzeugs zugeordneten Gruppen und/oder einer der Vorderseite des Kraftfahrzeugs zugeordneten Gruppe und/oder einer der Hinterseite des Kraftfahrzeugs zugeordneten Gruppe, zugeordnet werden, wobei für jede einen zugeordneten Mindestradius aufweisende Gruppe eine Störung des Messbetriebs separat bestimmt wird. Die von der Ultraschall-Messanordnung aufgenommenen Radien werden also in mehrere Bereich gruppiert, beispielsweise "Links", "Rechts" und "Vorne"), so dass auf diese Weise beispielsweise verhindert werden kann, dass ein störsignalanfälliger Sensor, der beispielsweise nicht stabil verbaut ist, alle möglichen Signalwege als gestört markiert. Selbstverständlich kann grundsätzlich auch vorgesehen sein, dass die Gruppen jeweils einen Sensor enthalten. Im Hinblick auf die bereits erwähnte Zuordnung unterschiedlicher Radien kann in diesem Zusammenhang im Übrigen vorgesehen sein, dass wenigstens zwei Gruppen ein unterschiedlicher Mindestradius zugeordnet ist. Selbstverständlich können zwei Gruppen auch denselben zugeordneten Mindestradius aufweisen; auf diese Weise würden wenigstens teilweise unterschiedliche Mindestradien realisiert. Weiterhin kann beispielsweise vorgesehen sein, dass der eine Vorderseitengruppe betreffende Mindestradius das zweifache eines den Seitengruppen zugeordneten Mindestradius betragen kann.

Wie bereits erwähnt, ist der Mindestradius besonders vorteilhaft geschwindigkeitsabhängig , wobei der Mindestradius, insbesondere linear, mit der Geschwindigkeit ansteigt. Damit wird letztlich der lineare Zusammenhang zwischen Geschwindigkeit und Strecke auch im Rahmen der erfindungsgemäßen Plausibilitätsbetrachtung eingeführt. Bei einer Geschwindigkeit von beispielsweise 100 km/h können Ultraschallradien in Längsrichtung, die kleiner als einen Meter sind, kaum mehr von vorausfahrenden Fahrzeugen stammen, während in Querrichtung beispielsweise Ultraschallradien kleiner als 0,5 Meter bei Geschwindigkeiten ab 100 km/h unplausibel wären.

In besonders vorteilhafter Ausgestaltung der vorliegenden Erfindung kann vorgesehen sein, dass ein Störwahrscheinlichkeitswert verwendet wird, der bei einem einen geringen Radius als den Mindestradius ergebenden Vergleich erhöht und bei für jeden Radius den Mindestradius überschreitenden oder annehmenden Radius erniedrigt wird. Insbesondere kann hierbei ein zwischen einem Minimalwert und einem Maximalwert, insbesondere zwischen 0 und 1, liegender Störwahrscheinlichkeitswert verwendet werden. Während mithin wie erfindungsgemäß vorgesehen jeder Radius mit dem gegebenenfalls entsprechend zugeordneten Mindestradius verglichen wird, wird beobachtet, ob Radien abweichen. Der Störwahrscheinlichkeitswert kann dabei nur absinken, wenn alle verglichenen Radien größer als ihr zugeordneter Mindestradius ist oder diesen wenigstens annimmt. Es wird mithin überprüft, ob unplausible Werte über einen längeren Zeitraum anliegen, so dass die Wahrscheinlichkeit für eine Störung immer größer wird. Der Störwahrscheinlichkeitswert entspricht letztlich einer Wahrscheinlichkeit, die inkrementiert wird. Diese Wahrscheinlichkeit wird wieder dekrementiert, wenn über einen bestimmten Zeitraum (insbesondere einen Zeitschritt) keine Störungen auftreten. Wenn, wie oben bereits diskutiert, die Ultraschallradien in mehrere Gruppen eingeordnet sind, kann jeder dieser Gruppen ein solcher Störwahrscheinlichkeitswert zugeordnet werden.

Dabei kann insbesondere vorgesehen sein, dass bei Überschreitung eines ersten Grenzwerts für den Störwahrscheinlichkeitswert eine Störung detektiert wird und bei Unterschreitung eines zweiten Grenzwerts durch den Störwahrscheinlichkeitswert die Störung als beendet detektiert wird. Dabei kann vorgesehen sein, dass der erste Grenzwert und der zweite Grenzwert gleich sind, sie können jedoch auch vorteilhaft unterschiedlich gewählt werden. Wird beispielsweise der erste Grenzwert nahe oder gleich dem Maximalwert des Störwahrscheinlichkeitswerts gewählt, so sollte das Ende einer Störung nicht bereits bei nur zufällig auftretenden, sehr kurzzeitigen plausiblen Radienwerten wieder aufgehoben werden, so dass dann beispielsweise der zweite Grenzwert kleiner als der erste Grenzwert sein kann. Es sind selbstverständlich auch verschiedenste andere Ausgestaltungen denkbar.

In besonders vorteilhafter Ausgestaltung kann vorgesehen sein, dass bei Betrachtung einer Mehrzahl von Radien die Erhöhung des Störwahrscheinlichkeitswerts von der Anzahl der bei dem Vergleich den insbesondere dem entsprechenden Radius zugeordneten Mindestradius unterschreitenden Radien abhängig ist. Die Steigung des Störwahrscheinlichkeitswerts pro Zeitschritt kann also von der Anzahl der Störsignale, also der den entsprechenden Mindestradius unterschreitenden Radien, abhängig gemacht werden, so dass umfassendere Störungen einer gesamten Gruppe oder gar aller Ultraschallsensoren schneller bestimmt werden können.

Weiterhin kann vorgesehen sein, dass für den Wert der Erhöhung oder Erniedrigung des Störwahrscheinlichkeitswerts weitere, insbesondere wetter- und/oder umgebungsbezogenen Daten berücksichtigt werden, insbesondere eine Aktivität eines Scheibenwischers und/oder Daten eines Regensensors und/oder die Außentemperatur. Es ist mithin möglich, äußere Einflüsse, die für das Vorliegen einer Störung des Messbetriebs sprechen, einzubinden, so dass die Störwahrscheinlichkeit bei einer tatsächlich eintretenden Störung schneller erhöht wird und entsprechend schneller auf die tatsächlich eingetretene Störung reagiert werden kann.

Dabei kann die Steigerungsgeschwindigkeit bzw. der Wert, in dem pro Zeitschritt erhöht wird, beispielsweise so gewählt werden, dass bei einem dauerhaften Ausfall eines Sensors nach 30 Sekunden oder einer Minute eine Störung des Messbetriebs ermittelt wird.

Neben dem Verfahren betrifft die vorliegende Erfindung auch ein Kraftfahrzeug, umfassend eine Ultraschall-Messanordnung mit wenigstens einem Ultraschallsensor und ein zur Durchführung des erfindungsgemäßen Verfahrens ausgebildetes Steuergerät. Sämtliche Ausführungen bezüglich des erfindungsgemäßen Verfahrens lassen sich analog auf das erfindungsgemäße Kraftfahrzeug übertragen, so dass mithin auch mit dem erfindungsgemäßen Kraftfahrzeug eine kostengünstige und effiziente Methode geschaffen wird, Störungen im Messbetrieb einer Ultraschall-Messanordnung zu detektieren.

Die Ultraschall-Messanordnung kann dabei beispielsweise vier im vorderen Bereich des Kraftfahrzeugs, beispielsweise im Bereich der vorderen Stoßstange, angeordnete Ultraschallsensoren umfassen, wobei beispielsweise zwei Sensoren im Bereich der Ecken des Kraftfahrzeugs angeordnet sind und zwei weiter innen. Dann kann beispielsweise vorgesehen sein, zehn Radien zu bestimmen, indem zum einen die vom selben Sensor empfangenen Ultraschallsignale betrachtet werden, aber auch zwischen benachbarten Sendern ausgetauschte Signale. Die Ultraschallsensoren können dabei in einem gepulsten Betrieb nacheinander zum Senden von Ultraschall angesteuert werden, so dass die Empfangssignale ihnen oder den benachbarten Ultraschallsensoren zeitaufgelöst zugeordnet werden können.

Weitere Vorteile und Einzelheiten der vorliegenden Erfindung ergeben sich aus den im Folgenden beschriebenen Ausführungsbeispielen sowie anhand der Zeichnung. Dabei zeigen:
- Fig. 1: ein erfindungsgemäßes Kraftfahrzeug,
- Fig. 2: einen Ablaufplan des erfindungsgemäßen Verfahrens,
- Fig. 3: eine mögliche Abhängigkeit des Mindestradius von der Geschwindigkeit, und
- Fig. 4: ein möglicher zeitlicher Verlauf eines Störwahrscheinlichkeitswerts.

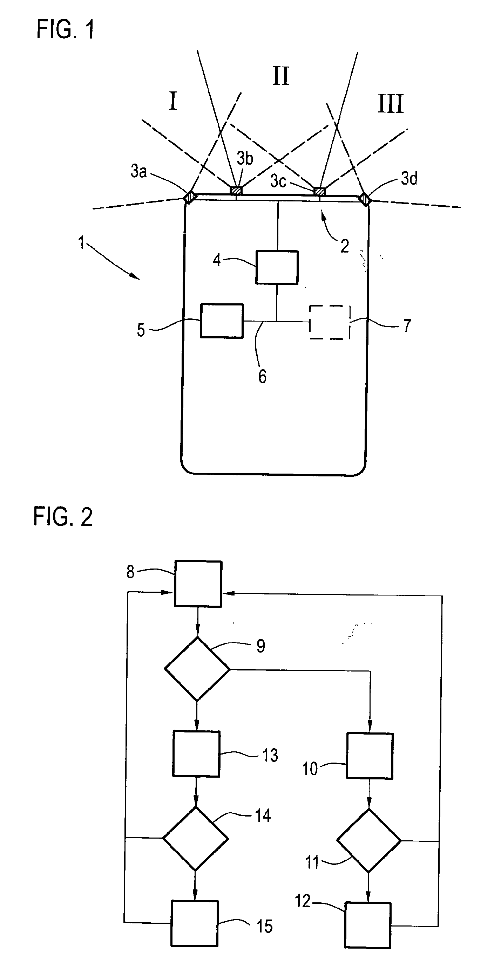

Fig. 1 zeigt ein erfindungsgemäßes Kraftfahrzeug 1. Es umfasst eine Ultraschall-Messanordnung 2 mit vier Ultraschall-Sensoren 3a bis 3d, die allesamt im Frontbereich des Kraftfahrzeugs 1 angeordnet sind. Die Öffnungskegel der Messbereiche der Ultraschallsensoren 3a bis 3d sind in Fig. 1 durch gestrichelte Linien angedeutet.

Der Ultraschall-Messanordnung 2 ist ein Steuergerät 4 zugeordnet, welches zur Durchführung des erfindungsgemäßen Verfahrens ausgebildet ist, das bedeutet, es kann bei höheren Geschwindigkeiten, hier Geschwindigkeiten größer als 50 km/h, feststellen, ob eine Störung des Messbetriebs vorliegt. Dazu werden die zu Radien aufbereiteten Ultraschallsignale mit einem jeweils zugeordneten Mindestradius verglichen.

Im vorliegenden Fall liefert die Ultraschall-Messanordnung 2 zehn Radien, und zwar vier sich unmittelbar aus den Ultraschallsignalen eines Ultraschallsensors 3a bis 3d, also durch von dem entsprechenden Ultraschallsensor 3a bis 3d ausgesandte und vom selben Ultraschallsensor 3d wieder empfangene Signale, ergebende Radien und sechs zwischen benachbarten Ultraschallsensoren 3a bis 3d gemessene Radien, das bedeutet, ein Ultraschallsignal wird von einem Ultraschallsensor 3a bis 3d ausgesendet und von einem benachbarten Ultraschallsensor 3a bis 3d empfangen. Vorliegend existieren also die Paare (3a, 3b), (3b, 3a), (3b, 3c), (3c, 3b), (3c, 3d), (3d, 3c).

Diese zehn Radien werden nun drei verschiedenen Gruppen I bis III zugeordnet, wobei die Gruppe I eine linke Seitengruppe, die Gruppe III eine rechte Seitengruppe und die Gruppe II eine Vorderseitengruppe bildet, wie auch in Fig. 1 angedeutet. Die Seitengruppen I, III enthalten dabei jeweils drei Radien, nämlich die unmittelbar von den Sensoren 3a bzw. 3d gemessenen Radien und die jeweils durch Signalaustausch mit den benachbarten Ultraschallsensoren 3d bzw. 3c erhaltenen Radien. Folglich umfasst die Gruppe II vier Radien.

Die Unterscheidung der Ultraschallsignale der verschiedenen Ultraschallsensoren 3a bis 3d ist möglich, da diese zeitlich getaktet nacheinander zum Aussenden von Ultraschallsignalen betrieben werden.

Im vorliegenden Fall ist die Ultraschall-Messanordnung 2 einer Einparkhilfe 5 zugeordnet, das Steuergerät 4 kommuniziert jedoch, beispielsweise über ein Bus-System 6, auch mit weiteren, bei 7 angedeuteten Fahrzeugsystemen, beispielsweise einem Längsführungssystem, die die Daten der Ultraschall-Messanordnung 2 auch bei höheren Geschwindigkeiten, hier größer als 50 km/h, nutzen wollen.

Aufgrund der vollständig anderen, bei höheren Geschwindigkeiten auftretenden Störungen des Messbetriebs der Ultraschall-Messanordnung 2 ist das Steuergerät 4 nun dazu ausgebildet, solche Störungen zu detektieren, so dass die Nutzung der Radien durch die weiteren Fahrzeugsysteme 7 im Fall von Störungen vermieden werden kann.

Hierzu wird das in Fig. 2 näher dargestellte erfindungsgemäße Verfahren durchgeführt, wobei die in Fig. 2 gezeigten Schritte für jede der Gruppen I - III in jedem Zeitschritt erfolgen.

In einem Schritt 8 werden dabei die aktuellen Radien aufgrund der Signale der Ultraschallsensoren 3a bis 3d ermittelt. In einem Schritt 9 wird überprüft, ob wenigstens einer der Radien der betrachteten Gruppe einen Mindestradius unterschreitet, das bedeutet, jeder Radius wird mit einem ihm entsprechend zugeordneten Mindestradius verglichen. Dabei ist der Radius hier gruppenabhängig gewählt, das bedeutet, der Mindestradius für die Gruppe II von Radien ist doppelt so groß wie der Mindestradius der Gruppen I und III. Zudem wird ein geschwindigkeitsabhängiger Mindestradius betrachtet, das bedeutet, der Mindestradius bestimmt sich nach der aktuellen Geschwindigkeit des Kraftfahrzeugs.

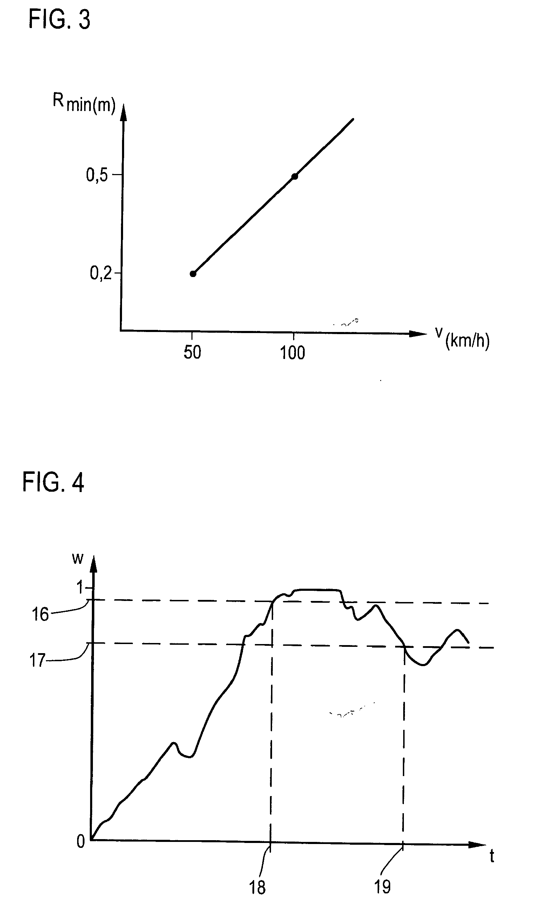

Dies soll näher erläutert werden im Hinblick auf Fig. 3, in der der Mindestradius Rₘᵢₙ für die Gruppen I und III, also die Seitengruppen, gegen die Geschwindigkeit aufgetragen ist. Ersichtlich wird ein linearer Zusammenhang angesetzt, wobei der Mindestradius bei 50 km/h 0,2 Meter beträgt, bei 100 km/h 0,5 Meter. Für die Vorderseitengruppe II wird der doppelte Mindestradius angesetzt.

Wird festgestellt, dass wenigstens ein Radius seinen zugeordneten Mindestradius überschreitet, so wird in einem Schritt 10 der Störwahrscheinlichkeitswert für die betrachtete Gruppe, in der die wenigstens eine Unterschreitung auftrat, erhöht. Jede Gruppe weist also einen Störwahrscheinlichkeitswert auf, der angibt, wie wahrscheinlich es ist, dass eine Störung des Messbetriebs tatsächlich vorliegt. Wird in einer oder mehreren Gruppen ein oder mehrere zu niedrigere Radien festgestellt, so werden die entsprechenden Störwahrscheinlichkeitswerte erhöht. Der konkrete Wert der Erhöhung des Störwahrscheinlichkeitswerts, der im Übrigen im vorliegenden Ausführungsbeispiel zwischen Null und Eins liegt, also einen Maximalwert von Eins und einen Minimalwert von Null aufweist, ist abhängig von der Zahl der Radien, die den Mindestradius unterschreiten, und zusätzlich von wetterbezogenen Daten, hier der Aktivität eines Scheibenwischers, Daten eines Regensensors und der Außentemperatur. Ist beispielsweise der Scheibenwischer aktiv und ein Regensensor zeigt Regen an, ist die Grundwahrscheinlichkeit bereits höher, dass eine Störung des Messbetriebs entstehen könnte, so dass der Störwahrscheinlichkeitswert schneller erhöht wird. Ebenso gilt, dass bei mehr den Mindestradius unterschreitenden Radien der Störwahrscheinlichkeitswert schneller erhöht wird.

In einem Schritt 11 wird dann überprüft, ob der Störwahrscheinlichkeitswert einen ersten Grenzwert überschreitet. Ist dies der Fall, so wird eine Störung des Messbetriebs detektiert, Schritt 12, so dass beispielsweise ein Flag oder ein sonstiges vom Steuergerät 4 zur Verfügung gestelltes Datum auf einen eine Störung anzeigenden Wert gesetzt werden kann, so dass andere Fahrzeugsysteme 7 von der Störung des Messbetriebs in Kenntnis gesetzt werden. In beiden Fällen wird im nächsten Zeitschritt wieder mit Schritt 8 fortgefahren.

Wird in Schritt 9 festgestellt, dass für eine Gruppe kein Radius den Mindestradius unterschreitet, so wird in Schritt 13 der Störwahrscheinlichkeitswert dieser Gruppe erniedrigt. Auch die Erniedrigungsgeschwindigkeit kann von den wetter- und/oder umgebungsbezogenen Daten abhängig gemacht werden. So kann der Wert beispielsweise langsamer absinken, wenn schlechtes Wetter und dabei eine hohe Störwahrscheinlichkeit festgestellt wird.

In Schritt 14 wird dann überprüft, ob aktuell eine Störung des Messbetriebs angezeigt wird, also das Flag bzw. das entsprechende Datum einen derartigen Wert besitzt. Ist dies gegeben, so wird weiterhin überprüft, ob die Störwahrscheinlichkeit einen zweiten Grenzwert unterschreitet. Tritt dies ein, so wird angenommen, dass die Störung beendet ist und es werden in Schritt 15 die entsprechenden Einstellungen vorgenommen.

Auch hier wird in beiden Fällen im nächsten Zeitschritt wieder mit Schritt 8 fortgefahren.

Fig. 2 zeigt das erfindungsgemäße Verfahren letztlich nur für eine der Gruppen in seinem Ablauf; selbstverständlich wird für jede der Gruppen der Störwahrscheinlichkeitswert auf die in Fig. 2 gezeigte Weise verwaltet. Eine Störung des Messbetriebs kann auf diese Weise für eine bestimmte Gruppe I, II bzw. III gesondert festgestellt werden, so dass ein Ausfallen eines Sensors nicht unbedingt sämtliche Messwerte der Ultraschall-Messanordnung 2 als unverwendbar kennzeichnet.

Fig. 4 zeigt einen beispielhaften Verlauf des Störwahrscheinlichkeitswertes w einer Gruppe. Dabei sind ebenso der erste Grenzwert 16 und der zweite Grenzwert 17 in Fig. 4 dargestellt. Es sei angemerkt, dass, obwohl hier verschiedene Grenzwerte dargestellt sind, beide Grenzwerte auch denselben Wert haben können. Ersichtlich übersteigt die Störwahrscheinlichkeit w zu einem Zeitpunkt 18 den ersten Grenzwert. Ab diesem Zeitpunkt wird daher eine Störung der entsprechenden Gruppe angenommen. Diese kann beispielsweise durch Regen oder dergleichen bedingt sein. Erst bei einem Zeitpunkt 19 wird der zweite Grenzwert wieder unterschritten, so dass die Störung als aufgehoben gelten kann.

Gilt eine Störung des Messbetriebs als detektiert, werden die von der Ultraschall-Messanordnung 2 gelieferten Radien von anderen Fahrzeugsystemen 7 nicht mehr genutzt.

## Patentansprüche

1. Verfahren zur Detektion von Störungen des Messbetriebs einer Ultraschall-Messanordnung (2) eines Kraftfahrzeugs (1) bei Geschwindigkeiten ab 50 km/h, wobei die wenigstens einen Ultraschall-Sensor (3a, 3b, 3c, 3d) umfassende Ultraschall-Messanordnung (2) als Ausgangsdaten wenigstens einen den Abstand zu dem nächstgelegenen, im Erfassungsbereich des wenigstens einen zur Messung bezüglich des Radius genutzten Sensors (3a, 3b, 3c, 3d) liegenden Objekts beschreibenden Radius umfassen,
**dadurch gekennzeichnet,**
**dass** eine Störung des Messbetriebs in Abhängigkeit wenigstens eines Vergleichs des Radius' mit einem geschwindigkeitsabhängigen Mindestradius ermittelt wird, wobei der Mindestradius mit der Geschwindigkeit ansteigt.

2. Verfahren nach Anspruch 1,
**dadurch gekennzeichnet,**
**dass**, falls mehrere Radien als Ausgangsdaten geliefert werden, unterschiedlichen Radien unterschiedliche Mindestradien zugeordnet sind.

3. Verfahren nach Anspruch 2,
**dadurch gekennzeichnet,**
**dass** die mehreren Radien mehreren insbesondere ortsabhängigen Gruppen (I, I, III), insbesondere den Seiten des Kraftfahrzeugs (1) zugeordneten Gruppen (I, III) und/oder einer der Vorderseite des Kraftfahrzeugs (1) zugeordneten Gruppe (II) und/oder einer der Hinterseite des Kraftfahrzeugs (1) zugeordneten Gruppe, zugeordnet werden, wobei für jede einen zugeordneten Mindestradius aufweisende Gruppe (I, II, III) eine Störung des Messbetriebs separat bestimmt wird.

4. Verfahren nach einem der vorangehenden Ansprüche,
**dadurch gekennzeichnet,**
**dass** der Mindestradius linear mit der Geschwindigkeit ansteigt.

5. Verfahren nach einem der vorangehenden Ansprüche,
**dadurch gekennzeichnet,**
**dass** ein Störwahrscheinlichkeitswert verwendet wird, der bei einem einen geringeren Radius als den Mindestradius ergebenden Vergleich erhöht und bei für jeden Radius den Mindestradius überschreitendem oder annehmendem Radius erniedrigt wird.

6. Verfahren nach Anspruch 5,
**dadurch gekennzeichnet,**
**dass** bei Überschreitung eines ersten Grenzwerts (16) für den Störwahrscheinlichkeitswert eine Störung detektiert wird und bei Unterschreitung eines zweiten Grenzwerts (17) durch den Störwahrscheinlichkeitswert die Störung als beendet detektiert wird.

7. Verfahren nach Anspruch 5 oder 6,
**dadurch gekennzeichnet,**
**dass** bei Betrachtung einer Mehrzahl von Radien die Erhöhung des Störwahrscheinlichkeitswerts von der Anzahl der bei dem Vergleich den insbesondere dem entsprechenden Radius zugeordneten Mindestradius unterschreitenden Radien abhängig ist.

8. Verfahren nach einem der Ansprüche 5 bis 7,
**dadurch gekennzeichnet,**
**dass** für den Wert der Erhöhung oder Erniedrigung des Störwahrscheinlichkeitswerts weitere, insbesondere wetter- und/oder umgebungsbezogene Daten berücksichtigt werden, insbesondere eine Aktivität eines Scheibenwischers und/oder Daten eines Regensensors und/oder die Außentemperatur.

9. Kraftfahrzeug (1), umfassend eine Ultraschall-Messanordnung (2) mit wenigstens einem Ultraschallsensor (3a, 3b, 3c, 3d) und ein zur Durchführung des Verfahrens nach einem der vorangehenden Ansprüche ausgebildetes Steuergerät (4).

## Claims

1. Method for detecting malfunctions in the measurement operation of an ultrasound measurement arrangement (2) of a motor vehicle (1) at speeds above 50 km/h, the ultrasound measurement arrangement (2), which comprises at least one ultrasound sensor (3a, 3b, 3c, 3d), comprising as the output data at least one radius which describes the distance from the closest object in the detection range of the at least one sensor (3a, 3b, 3c, 3d) used for the measurement relative to the radius, **characterised in that** a malfunction in the measurement operation is identified on the basis of at least one comparison of the radius with a speed-dependent minimum radius, the minimum radius increasing with the speed.

2. Method according to claim 1, **characterised in that**, if a plurality of radii are provided as output data, different minimum radii are assigned to different radii.

3. Method according to claim 2, **characterised in that** the plurality of radii are assigned in particular to a plurality of location-based groups (I, II, III), in particular to groups (I, III) assigned to the sides of the motor vehicle (1) and/or to a group (II) assigned to the front of the motor vehicle (1) and/or to a group assigned to the rear of the motor vehicle (1), a malfunction in the measurement operation being determined separately for each group (I, II, III) having an assigned minimum radius.

4. Method according to any of the preceding claims, **characterised in that** the minimum radius increases linearly with the speed.

5. Method according to any of the preceding claims, **characterised in that** a malfunction probability value is used, which is increased when a comparison results in a radius that is smaller than the minimum radius and which is reduced when the radius exceeds or takes on the minimum radius for each radius.

6. Method according to claim 5, **characterised in that** a malfunction is detected when a first threshold (16) for the malfunction probability value is exceeded and the malfunction is detected as having finished when the malfunction probability value drops below a second threshold (17).

7. Method according to either claim 5 or claim 6, **characterised in that**, when considering a plurality of radii, the increase in the malfunction probability value is dependent on the number of radii which, during the comparison, are less than the minimum radius which is assigned in particular to the corresponding radius.

8. Method according to any of claims 5 to 7, **characterised in that** additional, in particular weather- and/or environment-based data are taken into consideration for the value of the increase or reduction in the malfunction probability value, in particular activity of a windscreen wiper and/or data from a rain sensor and/or the outside temperature.

9. Motor vehicle (1) comprising an ultrasound measurement arrangement (2), which comprises at least one ultrasound sensor (3a, 3b, 3c, 3d), and a control device (4) designed to implement the method according to any of the preceding claims.

## Revendications

1. Procédé de détection de perturbations de l'activité de mesure d'un système de mesure à ultrasons (2) d'un véhicule automobile (1) à des vitesses à partir de 50 km/h, dans lequel le système de mesure à ultrasons (2) comprenant au moins un capteur d'ultrasons (3a, 3b, 3c, 3d) comprend comme données de départ au moins un rayon décrivant la distance à l'objet qui se trouve le plus près dans la zone de couverture du au moins un capteur (3a, 3b, 3c, 3d) utilisé pour la mesure par rapport au rayon,
**caractérisé en ce que** :
une perturbation de l'activité de mesure est obtenue en fonction d'au moins une comparaison du rayon avec un rayon minimal fonction de la vitesse, dans lequel le rayon minimal augmente avec la vitesse.

2. Procédé selon la revendication 1,
**caractérisé en ce que** :
au cas où plusieurs rayons sont fournis comme données de départ, à différents rayons sont affectés différents rayons minima.

3. Procédé selon la revendication 2,
**caractérisé en ce que** :
les multiples rayons ont été affectés à plusieurs groupes (I, II, III) en particulier en fonction de l'emplacement, en particulier des groupes (I, II) affectés aux côtés du véhicule automobile (1) et/ou un groupe (II) affecté à l'avant du véhicule automobile (1) et/ou un groupe affecté à l'arrière du véhicule automobile (1), dans lequel une perturbation de l'activité de mesure est déterminée séparément pour chaque groupe (I, II, III) présentant un rayon minimal affecté.

4. Procédé selon l'une quelconque des revendications précédentes,
**caractérisé en ce que** :
le rayon minimal augmente de manière linéaire avec la vitesse.

5. Procédé selon l'une quelconque des revendications précédentes,
**caractérisé en ce que** :
on utilise une valeur de probabilité de perturbation qui est augmentée lors d'une comparaison fournissant un rayon plus petit que le rayon minimal et est réduite pour chaque rayon dépassant ou acceptant le rayon minimal.

6. Procédé selon la revendication 5,
**caractérisé en ce que** :
lors du dépassement d'une première valeur limite (16) pour la valeur de probabilité de perturbation, on détecte une perturbation et, lorsque la valeur de probabilité de perturbation passe en dessous d'une seconde valeur limite (17), la perturbation est détectée comme déterminée.

7. Procédé selon la revendication 5 ou la revendication 6,
**caractérisé en ce que** :
lors de l'observation d'une pluralité de rayons, l'augmentation de la valeur de probabilité d'une perturbation dépend du nombre de rayons inférieurs au rayon minimal en particulier affecté au rayon correspondant lors de la comparaison.

8. Procédé selon l'une quelconque des revendications 5 à 7,
**caractérisé en ce que** :
pour la valeur de l'augmentation ou de la réduction de la valeur de probabilité d'une perturbation, d'autres données, en particulier des données se rapportant au temps et/ou à l'environnement, ont été prises en compte, en particulier une activité d'un balai d'essuie-glace et/ou des données d'un capteur de pluie et/ou la température externe.

9. Véhicule automobile (1) comprenant un système de mesure à ultrasons (2) avec au moins un capteur d'ultrasons (3a, 3b, 3c, 3d) et un appareil de commande (4) conformé pour réaliser le procédé selon l'une quelconque des revendications précédentes.
